# EUROPÄISCHE PATENTSCHRIFT

(11) **EP 1 947 299 B1**
(45) Veröffentlichungstag und Bekanntmachung des Hinweises auf die Patenterteilung: **15.05.2013**
(21) Anmeldenummer: 08100574.6
(22) Anmeldetag: 17.01.2008
(51) Int. Cl.: F01D 17/14, F02C 6/12

(54) **Abgasturbolader für eine Brennkraftmaschine**
Exhaust gas turbocharger for a combustion engine
Turbosoufflante de gaz d'échappement pour un moteur à combustion interne

(30) Priorität: 18.01.2007 AT 932007
(43) Veröffentlichungstag der Anmeldung: 23.07.2008
(73) Patentinhaber: Jegel, Franz Peter, Ing., 4400 Steyr (AT)
(72) Erfinder: Jegel, Franz Peter, 4400 Steyr (AT); Blank, Otto, 4400 Steyr (AT); Binder, Klaus, 4460 Losenstein (AT)
(74) Vertreter: Babeluk, Michael

(56) Entgegenhaltungen:
- DE-A1-102005 019 938
- US-A- 2 827 261
- US-A- 5 105 616

## Beschreibung

Die Erfindung betrifft einen Abgasturbolader für eine Brennkraftmaschine mit einer Abgasturbine und einem Verdichter, sowie mit einer Verstelleinrichtung zur Veränderung der Strömung im Verdichter, wobei das Laufrad des Verdichters mehrflutig, vorzugsweise zweiflutig ausgebildet ist, wobei eine innere Flut von einer äußeren Flut durch eine rotationssymmetrische Trennwand getrennt ist und durch die Verstelleinrichtung die Strömung durch zumindest eine der beiden Fluten sperrbar ist, wobei die Verstelleinrichtung durch einen stromaufwärts des Laufrades im Ansauggehäuse des Verdichters angeordneten Sperrschieber gebildet ist, und wobei der Sperrschieber in zumindest einer Sperrstellung die äußere Flut sperrt und in zumindest einer Freigabestellung beide Fluten frei gibt.

Die Anpassung von Abgasturboladern mit variabler Turbinengeometrie bei PKW-Brennkraftmaschinen zwingt zu einem Kompromiss zwischen maximal erreichbarer Motorleistung und Anfahrdrehmoment bzw. Ansprechverhalten. Die Volllastdrehzahlen bei PKW-Diesel-Brennkraftmaschinen reichen von etwa 1.000 bis 5.000 min⁻¹. Bei Otto-Brennkraftmaschinen erweitert sich dieser Bereich bis zu etwa 7.000 min⁻¹. Um für diese enorme Drehzahlspanne die bestmögliche Aufladung der Brennkraftmaschine zu ermöglichen, werden entweder zwei Abgasturbolader oder eine Kombination aus Abgasturbolader und mechanischer Zusatzaufladung zur Anwendung gebracht. Für diese aufwendige Ausweichlösung ist die starre Größe des Turboverdichters mit seinem Arbeitscharakter zwischen den beiden Begrenzungen des Arbeitsfeldes, der Pump- und der Stopfgrenze verantwortlich. Ein für die maximale Motorleistung mit gutem Wirkungsgrad ausgelegter Turboverdichter mit seiner ungeregelten starren Größe produziert einen zu geringen Ladedruck bei einer Motordrehzahl von etwa 1.000 min⁻¹. Dieser charakteristische Punkt im Motorkennfeld sollte vom Turboverdichter mit einem Druckverhältnis zwischen Druck- zu Saugseite von zumindest 2,0 gestützt sein. Ein derartiger Betriebspunkt im Verdichterkennfeld liegt aber im allgemeinen jenseits der Pumpgrenze. Der Verdichter wäre somit für diese Motoranforderung zu groß ausgelegt.

Es ist bekannt, dass eine Verschiebung des Verdichterkennfeldes in Richtung eines geringeren Massendurchsatzes mittels einer dem Laufrad vorgesetzten, verstellbaren Dralleinrichtung erreicht werden kann. Die WO 03/083275 A1 beschreibt etwa einen variablen Abgasturbolader für eine Brennkraftmaschine mit einer Abgasturbine und einem Verdichter mit einer variablen Drall- und/oder Drosseleinrichtung. Der Verdichter weist dabei nur einen Einströmkanal auf, in dem die variable Drall- und Drosseleinrichtung in Strömungsrichtung vor dem Laufrad angeordnet ist.

Die US 6,679,057 B2 offenbart einen Abgasturbolader mit einer Einrichtung zur Veränderung der Turbinengeometrie. Weiters weist der Abgasturbolader eine Einrichtung zur Veränderung der Verdichtergeometrie auf, welche innerhalb des Verdichtergehäuses zwischen dem Ladeluftaustritt und dem Laufrad angeordnet ist.

Des weiteren ist aus der WO 2004/009961 A1 ein Abgasturbolader für eine Brennkraftmaschine bekannt, bei der stromaufwärts des Verdichterlaufrades eine veränderbare Drosseleinrichtung angeordnet ist, mit welcher die einströmende Luftmasse verändert werden kann.

Bei den bekannten Lösungen werden somit nur die Zuström- bzw. Abströmverhältnisse, aber nicht die Strömungsverhältnisse im Laufrad selbst verändert.

Die US 2005/056014 A1 offenbart einen Abgasturbolader für eine Brennkraftmaschine mit einer Abgasturbine und einem Verdichter sowie mit einer Verstelleinrichtung zur Veränderung der Strömung im Verdichter. Das Laufrad des Verdichters ist mehrflutig ausgebildet.

Die US 5,105,616 A1 zeigt eine Brennkraftmaschine mit einer Turbine und einem Verdichter sowie mit einer Verstelleinrichtung zur Veränderung der Strömung im Verdichter. Das Laufrad des Verdichters ist mehrflutig ausgebildet, wobei eine innere Flut von einer äußeren Flut durch eine rotationssymmetrische Trennwand getrennt ist. Die Austritte aus den beiden Fluten sind radial versetzt zueinander angeordnet. Durch eine durch einen Leitapparat mit verstellbaren Leitschaufeln gebildete Verstelleinrichtung ist die Strömung durch zumindest einer der beiden Fluten sperrbar.

Die DE 31 20 739 A1 offenbart einen Abgasturbolader für eine Brennkraftmaschine mit einem Verdichter und einer Abgasturbine, wobei zur Umgehung der Rotorkammer des Verdichters ein Bypasskanal mit einem darin angeordnet Ventil vorgesehen ist. Dabei kann durch eine variable Verdichtergeometrie in Form einer hülsenförmigen Trennwand, eines Stempels und eines Leitgitters eine Mündungsöffnung eines ringförmigen Zusatzkanales in einem radialen Radeintrittsbereich des Verdichterrades freigegeben werden. Das Laufrad ist dabei nicht über die gesamte Länge zweiflutig ausgebildet, da nur im Eintrittsbereich ein Konturring vorgesehen ist, der die Strömung in zwei Fluten teilt. Ab dem mittleren Bereich bis zum Austrittsbereich ist das Laufrad nur mehr einflutig gestaltet.

Aus der DE 10 2005 019 938 A1 ist ein Abgasturbolader für eine Brennkraftmaschine bekannt, dessen Verdichterrad einen Hilfsschaufeln ausbildenden Konturring aufweist, der auf den Verdichterradschaufeln des Verdichterrades in dem radialen und dem axialen Eintrittsbereich des Verdichterrades vorgesehen ist.

Des Weiteren beschreibt die DE 102 23 876 A1 einen Verdichter für eine Brennkraftmaschine, wobei das Verdichterrad einen die Verdichterradschaufeln radial umgreifenden Deckring aufweist, um die Strömung im Verdichter zu verändern.

Aufgabe der Erfindung ist es, in jedem Betriebsbereich der Brennkraftmaschine einen Betrieb des Abgasturboladers mit optimalem Verdichterwirkungsgrad zu ermöglichen.

Erfindungsgemäß wird dies durch einen Abgasturbolader nach Anspruch 1 erreicht.

Der Sperrschieber ist dabei in Richtung der Achse des Laufrades verschiebbar im Ansauggehäuse gelagert.

Durch die Trennwand wird die Fördergeometrie des Laufrades des Verdichters in zwei ungleich große Förderbereiche geteilt. Die Trennwand stützt dabei die Laufradflügel zueinander mit radialem Abstand zur Nabe ab und steigert dadurch die Drehzahlfestigkeit.

Besonders vorteilhaft ist es, wenn im Verbindungskanal ein Schaltventil angeordnet ist. Durch die Druckbeaufschlagung des Laufrades mit Ladeluft auf die Rückseite der Laufradschaufeln kann die Turbodrehzahl eingeengt und somit der Betrieb im optimalen Wirkungsgradbereich gewährleistet werden. Das Schaltventil gibt dabei die Strömungsverbindung durch den Verbindungskanal von der Druckspirale zum Ansaugstutzen des Verdichterzulaufes frei, wodurch die geförderte Luft mit geringem Strömungswiderstand zirkulieren kann.

Dabei ist es besonders vorteilhaft, wenn im Bereich der Mündung des Ringkanals in die äußere Flut des Laufrades eine Leiteinrichtung angeordnet ist, wobei vorzugsweise die Leiteinrichtung zumindest einen düsenförmig gestalteten und auf die Rückseite der Laufschaufeln gerichteten Leitkanal aufweist.

Durch die düsenartig ausgebildete Leiteinrichtung wird ein optimales Anblasen der Laufschaufeln in radial-tangentialer Richtung ermöglicht.

Eine weitere Steigerung des Wirkungsgrades kann erreicht werden, wenn zumindest einer der beiden Fluten des Laufrades ein Drallleitelement vorgeschaltet ist. Dabei kann vorgesehen sein, dass das Drallleitelement axial verschiebbar und vorzugsweise durch den Sperrschieber gebildet ist. Alternativ dazu ist es auch möglich, dass das Drallleitelement feststehend und zweiflutig ausgebildet ist und der Sperrschieber in zumindest einer Sperrstellung zumindest eine der beiden Fluten des Laufrades sperrt.

Die Erfindung wird im Folgenden anhand der Figuren näher erläutert. Es zeigen:
- Fig. 1: einen erfindungsgemäßen Abgasturbolader in einem Längsschnitt in einer Freigabestellung der Verstelleinrichtung in einer ersten Ausführungsvariante;
- Fig. 2: den Abgasturbolader in einem Längsschnitt in einer Sperrstellung der Verstelleinrichtung;
- Fig. 3: ein Laufrad des Verdichters in einer Schrägansicht;
- Fig. 4: einen erfindungsgemäßen Abgasturbolader in einem Längsschnitt in einer zweiten Ausführungsvariante;
- Fig. 5: einen erfindungsgemäßen Abgasturbolader in einem Längsschnitt in einer Freigabestellung in einer dritten Ausführungsvariante;
- Fig. 6: diesen Abgasturbolader in einem Längsschnitt in einer Sperrstellung; und
- Fig. 7: die Drallleiteinrichtung aus Fig. 5 und Fig. 6 in einer Schrägansicht.

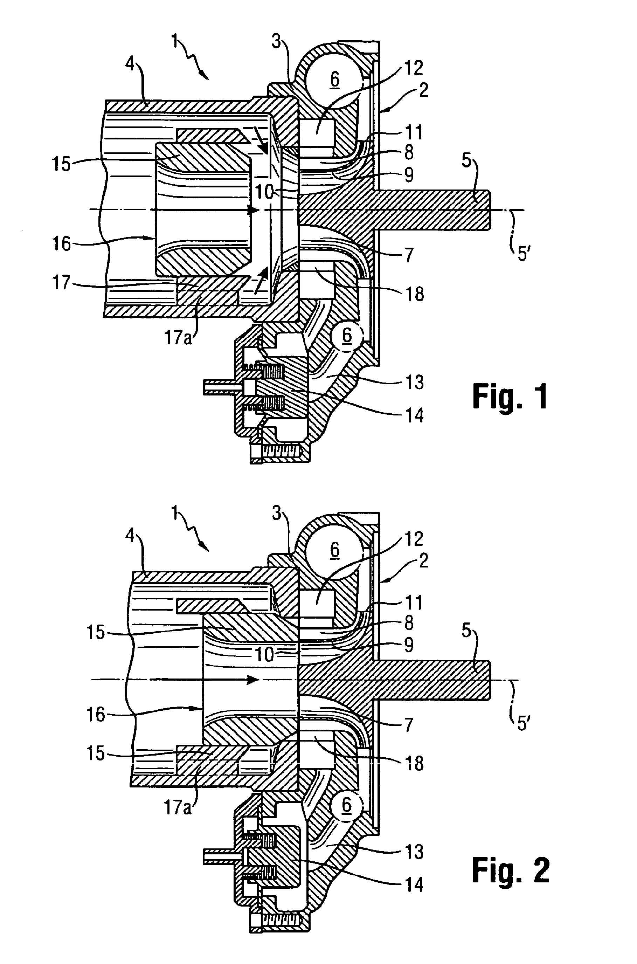

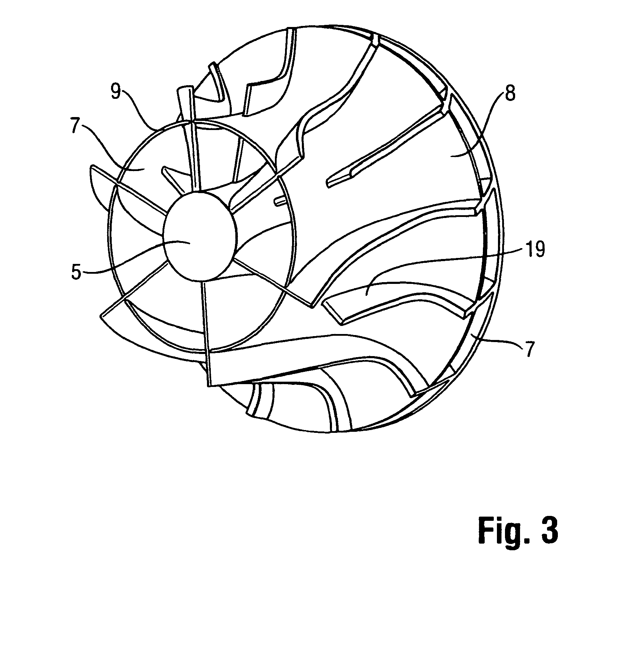

Von dem Abgasturbolader 1 einer Brennkraftmaschine ist nur der Verdichter 2 dargestellt. Der in Fig. 1 und Fig. 2 gezeigte Verdichter 2 weist ein Verdichtergehäuse 3 und ein Ansauggehäuse 4 auf. Im Verdichtergehäuse 3 ist ein in Fig. 3 in Schrägansicht gezeigtes Laufrad 5 drehbar angeordnet. Das Verdichtergehäuse 3 bildet eine Druckspirale 6 aus.

Das Laufrad 5 ist mehrflutig ausgebildet und weist eine innere Flut 7 und eine äußere Flut 8 auf, wobei die beiden Fluten 7, 8 durch eine rotationssymmetrische Trennwand 9 des Laufrades 5 voneinander getrennt sind. Die Trennwand 9 erstreckt sich vom Eintrittsbereich 10 aus dem Ansauggehäuse 4 bis zum Austrittsbereich 11 in die Druckspirale 6.

Nahe dem Eintrittsbereich 10 ist das Laufrad 5 von einem in das Verdichtergehäuse 3 eingeformten Ringkanal 12 umgeben, welcher über einen Verbindungskanal 13 mit der Druckspirale 6 verbunden ist. Im Verbindungskanal 13 ist ein Schaltventil 14 angeordnet, mit welchem die Strömung durch den Verbindungskanal 13 gesperrt oder freigegeben werden kann.

Stromaufwärts des Laufrades 5 ist im Ansauggehäuse 4 eine durch einen Sperrschieber 15 gebildete Verstelleinrichtung 16 parallel zur Achse 5' des Laufrades 5 verschiebbar angeordnet. Der hülsenartige Sperrschieber 15 ist auf einer Führungsnabe 17 axial verschiebbar gelagert. In der in Fig. 1 dargestellten Freigabestellung sind beide Fluten 7, 8 freigegeben, so dass das Laufrad 5 mit dem vollen Durchsatz beaufschlagbar ist. Wird der Sperrschieber 15 in die in Fig. 2 dargestellte Sperrstellung verschoben, so erfolgt eine stirnseitige Abdeckung der äu-βeren Flut 11, wodurch Luft aus dem Ansauggehäuse 3 nur in die innere Flut 7 einströmen kann. Über das Schaltventil 14 kann dabei der Verbindungskanal 13 von der Druckspirale 6 zum Ringraum 12 freigegeben werden, wodurch die geförderte Luft mit geringem Strömungswiderstand zirkulieren kann. Die axiale Anströmung des Laufrades 5 erfolgt somit durch das Ansauggehäuse 4, welches einen größeren Anschlussdurchmesser für den Luftkanal aufweist und koaxial mit der Führungsnabe 17 über längsseitige Abstützrippen 17a verbunden ist. Der Sperrschieber 15 in der Führungsnabe 17 verschließt in der Sperrstellung den Ansaugquerschnitt der äußeren Flut 8 und setzt den äußeren Arbeitsbereich außer Betrieb. Im Eintrittsbereich des Ringkanals 12 der äußeren Flut 8 des Laufrades 5 ist eine Leiteinrichtung 18 mit düsenartigen Leitkanälen vorgesehen, welche vom Ringkanal 12 tangential im Drehsinn auf die Rückseite der Laufradschaufeln 19 des Laufrades 5 gerichtet sind. Die Leitkanäle der Leiteinrichtung 18 führen die Ladeluft zum Laufrad 5 und wirken somit treibend. Der Ringkanal 12 wird dabei von der Druckspirale 6 über das Schaltventil 14 mit der Ladeluft versorgt.

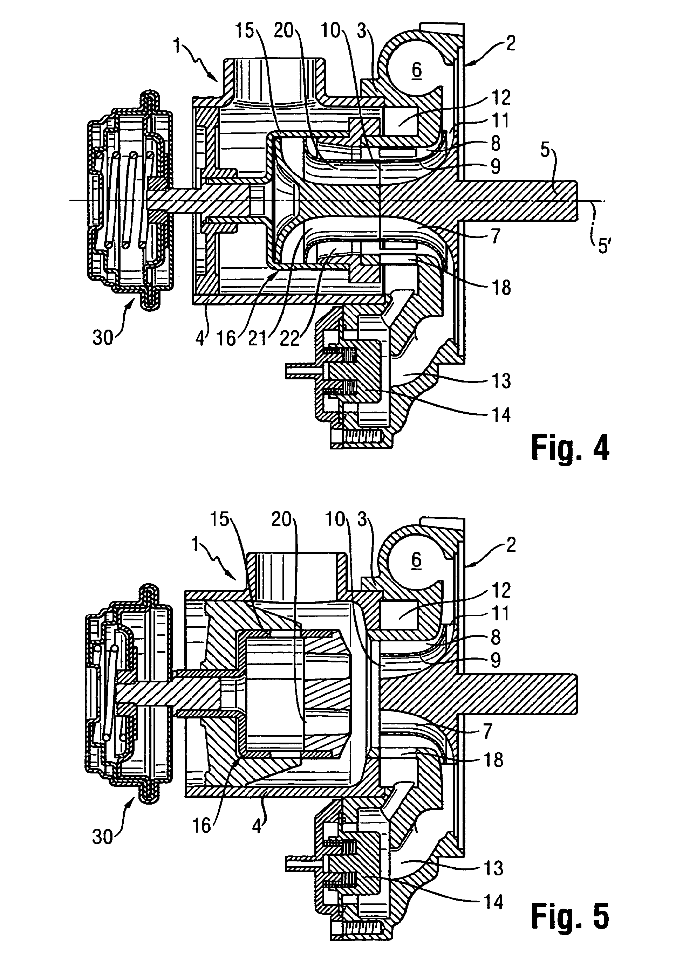

Fig. 4 zeigt eine Ausführung mit einem dem Laufrad 5 vorgeschalteten Drallleitelement 20, wobei das Drallleitelement 20 feststehend ausgebildet ist und Fluten 21, 22 aufweist, welche sich im Laufrad 5 fortsetzen. Durch Verschieben des durch eine Betätigungseinrichtung 30 betätigten Sperrschiebers 15 wird eine oder beide Fluten 21, 22 freigegeben oder gesperrt.

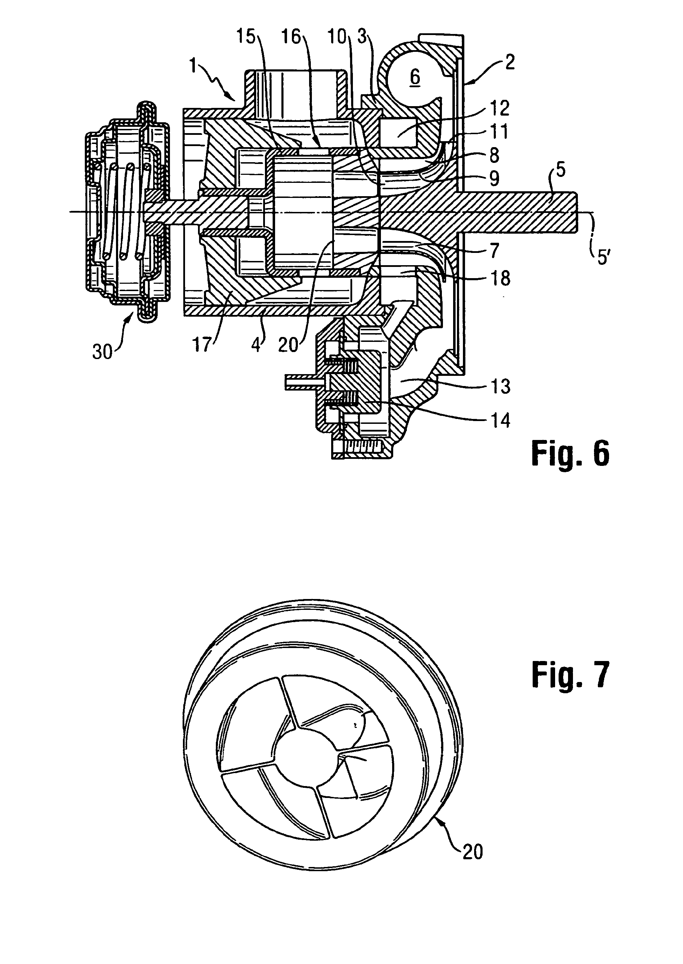

Die Fig. 5 und Fig. 6 zeigen eine weitere Ausführungsvariante, bei der das Drallleitelement 20 fest mit dem Sperrschieber 15 verbunden bzw. durch diesen gebildet ist. Das separat in Fig. 7 im Schrägriss dargestellte Drallleitelement 20 wirkt in der Sperrstellung auf die innere Flut 7 des Laufrades 5, wie in Fig. 6 gezeigt ist, wobei die äußere Flut 8 des Laufrades 5 gesperrt ist. In der in Fig. 5 gezeigten Freigabestellung sind beide Fluten 7, 8 des Laufrades 5 freigegeben.

## Patentansprüche

1. Abgasturbolader (1) für eine Brennkraftmaschine mit einer Abgasturbine und einem Verdichter (2), sowie mit einer Verstelleinrichtung (16) zur Veränderung der Strömung im Verdichter (2), wobei das Laufrad des Verdichters (2) zweiflutig ausgebildet ist, wobei eine innere Flut (7) von einer äußeren Flut (8) durch eine rotationssymmetrische Trennwand (9) getrennt ist , welche sich zwischen einem Eintritts-bis zu einem Austrittsbereich (10, 11) des Laufrades (5) erstreckt, wobei durch die Verstelleinrichtung (16) die Strömung durch zumindest eine der beiden Fluten (7, 8) sperrbar ist, wobei die Verstelleinrichtung (16) durch einen stromaufwärts des Laufrades (5) im Ansauggehäuse (4) des Verdichters (2) angeordneten Sperrschieber (15) gebildet ist, und wobei der Sperrschieber (15) in zumindest einer Sperrstellung die äußere Flut (8) sperrt und in zumindest einer Freigabestellung beide Fluten (7, 8) frei gibt, **dadurch gekennzeichnet, dass** die Laufradschaufeln (19) der äußeren Flut (8) des Laufrades (5) in radialer Richtung mit Druck aus einer Druckspirale (6) des Verdichters (2) beaufaphlagbar sind wenn der Sperrschieber (15) die äußere Flut (8) sperrt, wobei ein Verdichtergehäuse (3) einen das Laufrad (5) radial umgebenden Ringkanal (12) aufweist, welcher über einen Verbindungskanal (13) mittels eines Schaltventils (14) mit der Druckspirale (6) verbindbar ist.

2. Abgasturbolader (1) nach Anspruch 1, **dadurch gekennzeichnet, dass** der Sperrschieber (15) in Richtung der Achse (5') des Laufrades (5) verschiebbar im Ansauggehäuse (4) gelagert ist.

3. Abgasturbolader (1) nach einem der Ansprüche 1 bis 2, **dadurch gekennzeichnet, dass** im Bereich der Mündung des Ringkanals (12) in die äußere Flut (8) des Laufrades (5) eine Leiteinrichtung (18) angeordnet ist, wobei vorzugsweise die Leiteinrichtung (18) zumindest einen düsenförmig gestalteten und auf die Rückseite der Laufradschaufeln (19) gerichteten Leitkanal aufweist.

4. Abgasturbolader (1) nach einem der Ansprüche 1 bis 3, **dadurch gekenn-**zeichnet, **dass** zumindest einer der beiden Fluten (7, 8) des Laufrades (5) ein Drallleitelement (20) vorgeschaltet ist.

5. Abgasturbolader (1) nach Anspruch 4, **dadurch gekennzeichnet, dass** das Drallleitelement (20) durch den Sperrschieber (15) gebildet und axial verschiebbar ist.

6. Abgasturbolader (1) nach Anspruch 5, **dadurch gekennzeichnet, dass** das Drallleitelement (20) feststehend und vorzugsweise zweiflutig ausgebildet ist, wobei der Sperrschieber (15) in zumindest einer Sperrstellung zumindest eine der beiden Fluten (21, 22) des Laufrades (5) sperrt.

## Claims

1. An exhaust gas turbocharger (1) for an internal combustion engine, comprising an exhaust gas turbine and a compressor (2), and an adjusting device (16) for changing the flow in the compressor (2), with the blade wheel of the compressor (2) being arranged with double flow, with an inner flow (7) being separated from an outer flow (8) by a rotationally symmetric separating wall (9) which extends between an inlet region up to an outlet region (10, 11) of the blade wheel (5), with the flow through at least one of the two flows (7, 8) being lockable by the adjusting device (16), with the adjusting device (16) being formed by a lock valve (15) arranged upstream of the blade wheel (5) in the intake housing (4) of the compressor (2), and with the lock valve (15) blocking the outer flow (8) in at least one locking position and releasing both flows (7, 8) in at least one release position, **characterised in that** the blades (19) of the outer flow (8) of the blade wheel (5) can be pressurized in the radial direction with pressure from a pressure coil (6) of the compressor (2) when the lock valve (15) blocks the outer flow (8), with a compressor housing (3) comprising an annular channel (12) which radially encloses the blade wheel (5), said annular channel being connectible via a connecting channel (13) by means of a switching valve (14) with the pressure coil (6).

2. An exhaust gas turbocharger (1) according to claim 1, **characterised in that** the lock valve (15) is displaceably mounted in the intake housing (4) in the direction of the axis (5') of the blade wheel (5).

3. An exhaust gas turbocharger (1) according to one of the claims 1 to 2, **characterised in that** a guide device (18) is arranged in the region of the orifice of the annular channel (12) into the outer flow (8) of the blade wheel (5), with preferably the guide device (18) comprising at least one guide channel which is arranged in the manner of a nozzle and is directed towards the rear side of the blades (19) of the blade wheel.

4. An exhaust gas turbocharger (1) according to one of the claims 1 to 3, **characterised in that** at least one of the two flows (7, 8) of the blade wheel (5) is provided upstream with a swirl guide element (20).

5. An exhaust gas turbocharger (1) according to claim 4, **characterised in that** the swirl guide element (20) is formed by the lock valve (15) and is axially displaceable.

6. An exhaust gas turbocharger (1) according to claim 5, **characterised in that** the swirl guide element (20) is arranged in a fixed and preferably double-flow manner, with the lock valve (15) blocking at least one of the two flows (21, 22) of the blade wheel (5) in at least one blocking position.

## Revendications

1. Turbocompresseur de suralimentation (1) pour un moteur à combustion interne comprenant une turbine de gaz d'échappement et un compresseur (2), ainsi qu'un dispositif de réglage (16) pour faire varier le flux dans le compresseur (2), le rotor du compresseur (2) étant réalisé avec deux écoulements, un écoulement interne (7) étant séparé d'un écoulement externe (8) par une paroi de séparation (9) présentant une symétrie de rotation qui s'étend entre une zone d'entrée et une zone de sortie (10, 11) du rotor (5), le dispositif de réglage (16) étant susceptible de bloquer le flux au travers d'au moins l'un des deux écoulements (7, 8), le dispositif de réglage (16) étant formé par un registre d'arrêt (15) monté en amont du rotor (5) dans le boitier d'aspiration (4) du compresseur (2) et le registre d'arrêt (15) bloquant l'écoulement externe (8) dans au moins une position de blocage et libérant les deux écoulements (7, 8) dans au moins une position de libération,
**caractérisé en ce que**
les aubes (19) de rotor de l'écoulement externe (8) du rotor (5) peuvent être sollicitées en direction radiale par la pression refoulée par une spirale de pression (6) du compresseur (2), lorsque le registre d'arrêt (15) bloque l'écoulement externe (8), le boitier du compresseur (3) comprenant un canal annulaire (12) entourant radialement le rotor (5) qui peut être reliée par un canal de liaison (13) au moins d'une soupape de commutation (14) avec la spirale de pression (6).

2. Turbocompresseur de suralimentation (1) conforme à la revendication 1,
**caractérisé en ce que**
le registre d'arrêt (15) est logé mobile en translation dans le boitier d'aspiration (4) en direction de l'axe (5') du rotor (5).

3. Turbocompresseur de suralimentation (1) conforme à l'une des revendications 1 et 2,
**caractérisé en ce que**
dans la zone de l'embouchure du canal annulaire (12) dans l'écoulement externe (8) du rotor (5) est monté un dispositif de guidage (18), de préférence équipé d'au moins un canal de guidage réalisé en forme de buse et dirigé sur la face arrière des aubes (19) du rotor.

4. Turbocompresseur de suralimentation (1) conforme à l'une des revendications 1 à 3,
**caractérisé en ce qu'**
en amont d'au moins l'un des deux écoulements (7, 8) du rotor (5) est monté un élément de guidage par giration (20).

5. Turbocompresseur de suralimentation (1) conforme à la revendication 4,
**caractérisé en ce que**
l'élément de guidage par giration (20) est formé au travers du registre d'arrêt (15) et est susceptible de coulisser axialement.

6. Turbocompresseur de suralimentation (1) conforme à la revendication 5,
**caractérisé en ce que**
l'élément de guidage par giration (20) est réalisé fixe et de préférence avec deux écoulements, le registre d'arrêt (15) bloquant au moins l'un des deux écoulements (21, 22) du rotor (5) dans au moins une position de blocage.
